# EUROPEAN PATENT APPLICATION

(11) **EP 4 410 745 A1**
(43) Date of publication of application: **07.08.2024**
(21) Application number: 22876106.0
(22) Date of filing: 26.09.2022
(51) Int. Cl.: C01F 11/18, B01D 53/62, B01D 53/75, B01D 53/78

(54) **METHOD FOR FIXING CARBON DIOXIDE, METHOD FOR PRODUCING CALCIUM CARBONATE, AND METHOD FOR UTILIZING WASTE GYPSUM BOARD**

(30) Priority: 30.09.2021 JP 2021161854
(71) Applicant: Sumitomo Osaka Cement Co., Ltd., Tokyo, 105-8641 (JP); Yamaguchi University, Yamaguchi 753-8511 (JP); Kyushu University, National University Corporation, Nishi-ku Fukuoka-shi Fukuoka 819-0395 (JP)
(72) Inventor: KIKUCHI, Sadato, Tokyo 105-8641 (JP); NAKAMURA, Shogo, Tokyo 105-8641 (JP); OIZUMI, Risa, Tokyo 105-8641 (JP); KONISHI, Masayoshi, Tokyo 105-8641 (JP); HIGA, Mitsuru, Ube-shi, Yamaguchi 755-8611 (JP); TANIGUCHI, Ikuo, Fukuoka-shi, Fukuoka 819-0395 (JP)
(74) Representative: Müller-Boré & Partner Patentanwälte PartG mbB
(86) International application number: PCT/JP2022/035627
(87) International publication number: WO 2023/054239

(57) **Abstract**

Provided is a method in which carbon dioxide can be efficiently fixed, calcium carbonate that is a valuable can be efficiently produced from carbon dioxide, and a waste gypsum board can be effectively recycled without being wasted as it is by using the waste gypsum board for fixing carbon dioxide. This method includes: a first step of bringing a first solution containing an alkali metal hydroxide and gas containing carbon dioxide into contact with each other to produce a second solution containing an alkali metal salt; and a second step of bringing the second solution and a gypsum-containing material into contact with each other to produce calcium carbonate.

## Description

### Technical Field

The present invention relates to a method for fixing carbon dioxide, a method for producing calcium carbonate, and a method for utilizing a waste gypsum board.

### Background Art

Recently, the interest in global warming has increased, and a reduction in emissions of carbon dioxide to the atmosphere has been required. In various facilities such as a power plant, an incinerator, a cement factory, an iron mill, or a plant facility, a method for collecting exhaust gas containing carbon dioxide that is produced by an operation without being emitted to the atmosphere is considered. As one method for collecting carbon dioxide, a method for producing a carbonate by reaction with a group 2 element such as calcium or magnesium is known.

For example, Patent Literature 1 discloses a method for fixing carbon dioxide by causing an alkali earth metal oxide produced from brine to react with carbon dioxide. Patent Literature 2 discloses a method for fixing carbon dioxide, the method including: dissolving, for example, a waste material or rock such as a waste concrete or an iron and steel slag that contains a group 2 element such as calcium in a nitric acid solution to produce a nitrate solution of the group 2 element; and producing a carbonate by causing a sodium carbonate solution obtained by reaction of carbon dioxide in combustion exhaust gas and a sodium hydroxide solution to react with the nitrate solution.

In addition, carbon dioxide in exhaust gas exhausted from various facilities may be used for producing calcium carbonate. Patent Literature 3 discloses a method for producing calcium carbonate by causing carbon dioxide in exhaust gas such as flue gas to be absorbed by sodium hydroxide using a gas-liquid contact method to obtain a sodium carbonate solution and causing the obtained sodium carbonate solution to react with milk of lime obtained by hydration of quick lime.

### Citation List

### Patent Literature

[Patent Literature No. 1] Japanese Laid-open Patent Publication No. 2020-175344
[Patent Literature No. 2] Japanese Laid-open Patent Publication No. 2012-96975
[Patent Literature No. 3] Japanese Laid-open Patent Publication No. 2002-293537

### Summary of Invention

### Technical Problem

In the method of Patent Literature 1, in order to obtain the alkali earth metal oxide, a plurality of steps are required, for example, to remove an alkali metal, sulfuric acid, and the like from brine. Therefore, the process is complicated, and it cannot be said that the method is efficient. In addition, among these steps, a step that requires a large amount of energy, for example, an evaporation condensation step of brine or a thermolysis step of an alkali earth metal chloride is provided, which thus does not lead to an effective reduction in carbon dioxide.

In the method of Patent Literature 2, in the waste material or rock such as a waste concrete or an iron and steel slag, the content of the alkali earth metal such as calcium or magnesium is small. Therefore, it is difficult to efficiently fix carbon dioxide.

In the method of Patent Literature 3, the quick lime used for producing milk of lime can be typically obtained by calcination of a limestone at a high temperature of 900 to 1000°C. At this time, carbon dioxide in the limestone is emitted. Therefore, in the method of Patent Literature 3, carbon dioxide in the exhaust gas is absorbed, and there is a problem in that a reduction in carbon dioxide cannot be achieved.

The present invention has been made in consideration of the above-described problems, and an object thereof is to provide a method for efficiently fixing carbon dioxide in exhaust gas or the like produced from various facilities such as a power plant, an incinerator, a cement factory, an iron mill, or a plant facility, and a method for efficiently producing calcium carbonate using the fixing method. In addition, another object of the present invention is to provide a new method for utilizing a waste gypsum board.

Solution to Problem

The present inventors focused on gypsum (calcium sulfate) as a calcium source used for fixing carbon dioxide. The gypsum is obtained from natural ore and is also present in various forms as a waste gypsum board or a waste such as a recovery of a flue gas desulfurization process. Therefore, the gypsum is advantageous in that it is easily available. Accordingly, the present inventors conceived that a gypsum-containing material that is a waste containing a gypsum such as a waste gypsum board is used for fixing carbon dioxide as a new utilization method, thereby completing the present invention.

In order to solve the above-described problems, the present invention provides a method for fixing carbon dioxide and a method for producing calcium carbonate described below.
1. A method for fixing carbon dioxide, the method including:
   a first step of bringing a first solution containing an alkali metal hydroxide and gas containing carbon dioxide into contact with each other to produce a second solution containing at least one alkali metal salt among an alkali metal carbonate and an alkali metal bicarbonate; and
   a second step of bringing the second solution and a gypsum-containing material into contact with each other to produce calcium carbonate.
2. A method for producing calcium carbonate, the method including:
   a first step of bringing a first solution containing an alkali metal hydroxide and gas containing carbon dioxide into contact with each other to produce a second solution containing at least one alkali metal salt among an alkali metal carbonate and an alkali metal bicarbonate; and
   a second step of bringing the second solution and a gypsum-containing material into contact with each other to produce calcium carbonate.
   In addition, the present inventors focused on a waste gypsum board as a waste among gypsum-containing materials. The waste gypsum board is a waste produced in a large amount during replacement of buildings. The waste gypsum board is used as a soil conditioner or a cement auxiliary material but has a problem such as production of hydrogen sulfide. Therefore, currently, the recycling of the waste gypsum board has not progressed. Since the waste gypsum board contains calcium with a high concentration, the present inventors investigated how to recycle the waste gypsum board and found that a new utilization method capable of effectively recycling the waste gypsum board. That is, the present invention provides a method for utilizing a waste gypsum board described below.
3. A method for utilizing a waste gypsum board, the method including:
   a first step of bringing a first solution containing an alkali metal hydroxide and gas containing carbon dioxide into contact with each other to produce a second solution containing at least one alkali metal salt among an alkali metal carbonate and an alkali metal bicarbonate; and
   a second step of bringing the second solution and a waste gypsum board into contact with each other to produce calcium carbonate.

### Advantageous Effects of Invention

According to the present invention, carbon dioxide can be efficiently fixed, and calcium carbonate that is a valuable can be efficiently produced from carbon dioxide. In addition, according to the present invention, by using a waste gypsum board for fixing carbon dioxide, the waste gypsum board can be effectively recycled without being wasted as it is.

### Description of Embodiments

Hereinafter, the present invention will be described in detail. The present invention is not limited to the following embodiment, and any changes can be made within a range where the effects of the present invention do not deteriorate. The notation of a numerical range of "AA to BB" in the present specification means "AA or more and BB or less". In addition, in the present specification, numerical values regarding "or more", "or less", and "to" that relate to the description of a numerical range is any combination of numerical values. For example, when "CC to DD" and "EE to FF" in a certain numerical range are described, numerical ranges such as "CC to FF" and "EE to DD" are also included.

### [Method for Fixing Carbon Dioxide]

One aspect of the present invention relates to a method for fixing carbon dioxide, the method including:
a first step of bringing a first solution containing an alkali metal hydroxide and gas containing carbon dioxide into contact with each other to produce a second solution containing at least one alkali metal salt among an alkali metal carbonate and an alkali metal bicarbonate; and
a second step of bringing the second solution and a gypsum-containing material into contact with each other to produce calcium carbonate.

Any of the reaction relating to the production of the second solution in the first step or the reaction relating to the production of calcium carbonate in the second step using the gypsum-containing material is likely to progress stably with low energy. Further, the gypsum-containing material used in the second step will be described below in detail, and examples thereof include gypsum, a waste gypsum board, a recovery of a flue gas desulfurization process, fluorogypsum, phosphogypsum, and a gypsum-containing sludge obtained in various waste water treatment processes. This way, the gypsum-containing material used in the method for fixing carbon dioxide is widely available from a waste such as a waste gypsum board, a by-product that is produced in the process of producing chemical products, and the like.

In addition, as the carbon dioxide that is a target of the fixing method, carbon dioxide in exhaust gas or the like that is emitted (wasted) to the atmosphere from various facilities such as a power plant, an incinerator, or a plant facility can be used.

This way, in the method for fixing carbon dioxide according to one aspect of the present invention, the use of a waste, a by-product, and the like can be realized, and the reaction that progresses with low energy is adopted. Therefore, carbon dioxide can be very efficiently fixed. The amount of carbon dioxide emitted to the atmosphere can be suppressed, which can contribute to a reduction in environmental burden.

Hereinafter, the method for fixing carbon dioxide according to one aspect of the present invention will be described in detail from the first step.

### [First Step]

The first step is a step of bringing a first solution containing an alkali metal hydroxide and gas containing carbon dioxide into contact with each other to produce a second solution containing at least one alkali metal salt among an alkali metal carbonate and an alkali metal bicarbonate.

In the first step, due to the progress of a reaction represented by the following Reaction Formulas (1) and (2), at least one alkali metal salt among an alkali metal carbonate and an alkali metal bicarbonate is produced. Accordingly, the second solution obtained by the contact of the first solution and the gas containing carbon dioxide contains at least one alkali metal salt among an alkali metal carbonate (Ma₂CO₃) and an alkali metal bicarbonate (MaHCO₃).

2MaOH + CO₂ → Ma₂CO₃ + H₂O ... (1)

MaOH + CO₂ → MaHCO₃ ... (2)

In Reaction Formulas (1) and (2), Ma represents an alkali metal.

### (Gas containing Carbon Dioxide)

As the gas containing carbon dioxide (CO₂) that comes into contact with the first solution in the first step, any gas containing carbon dioxide can be used without any particular limitation. For example, exhaust gas exhausted from various facilities such as a power plant, an incinerator, a cement factory, an iron mill, or plant facility can be used.

For example, the concentration of carbon dioxide (CO₂) in the exhaust gas from the power plant is typically 8% to 15% by volume, the concentration of carbon dioxide (CO₂) in the exhaust gas from the incinerator is typically 5% to 15% by volume, the concentration of carbon dioxide (CO₂) in the exhaust gas from the cement factory is typically 15% to 25% by volume, and the concentration of carbon dioxide (CO₂) in the exhaust gas from the iron mill is typically 20% to 30% by volume although the concentrations can change depending on the operation conditions, the processes to be adopted, and the like in various facilities and thus cannot be uniquely determined.

Among the exhaust gases, the concentrations of carbon dioxide in the exhaust gas from the cement factory and the exhaust gas from the iron mill are high. Therefore, the progress of the reactions of Reaction Formulas (1) and (2) above can be efficiently facilitated, and the entire facility including a pipe size can be made compact. Therefore, in the method for fixing carbon dioxide according to one aspect of the present invention, the exhaust gases from the cement factory and the iron mill among the various exhaust gases are suitably used.

The various exhaust gases obtained as the gas containing carbon dioxide used in the first step typically contain impurities such as hydrogen chloride or powder dust (also called "dust", "combustion fly ash", "smoke dust", or the like". Therefore, the various facilities typically include a dechlorination facility for removing hydrogen chloride, and a dust collector such as an electric dust collector or a bag filter for removing dechlorinated dust obtained from the dechlorination facility and the powder dust.

As the gas containing carbon dioxide, gas from which impurities such as hydrogen chloride or dust are removed is preferably used from the viewpoint of, for example, improving the efficiency of the reaction of the carbon dioxide in the gas and the alkali metal hydroxide in the first solution.

For example, when the gas containing carbon dioxide is the exhaust gas from the cement factory, the exhaust gas is preferably at least one selected from exhaust gas that passes the dust collector and exhaust gas exhausted from a dechlorination bypass facility where combustion gas is extracted from a kiln duct and a dechlorinated dust is collected.

This way, when the gas containing carbon dioxide is the exhaust gas that passes the dust collector, the powder dust in the gas is removed by the dust collector. Therefore, the carbon dioxide in the exhaust gas and the alkali metal hydroxide in the first solution can be caused to efficiently react with each other.

In addition, the gas containing carbon dioxide is the exhaust gas exhausted from a dechlorination bypass facility where combustion gas is extracted from a kiln duct and a dechlorinated dust is collected, the exhaust gas contains carbon dioxide at the same concentration as the concentration of carbon dioxide in the exhaust gas that passes the dust collector. Therefore, carbon dioxide can be caused to efficiently react with the alkali metal hydroxide in the first solution.

The concentration of carbon dioxide in the exhaust gas that passes the dust collector is typically 15% to 25% by volume and is the same as that in exhaust gas that does not pass the dust collector. The concentration of carbon dioxide is preferably 20% to 25% by volume. The same can be applied to the concentration of carbon dioxide in the exhaust gas exhausted from the dechlorination bypass facility.

Before bringing the gas containing carbon dioxide used in the first step into contact with the first solution containing an alkali metal hydroxide, the carbon dioxide in the gas may be collected in advance using a method such as a chemical absorption method, a physical absorption method, a membrane separation method, a cryogenic separation method, or an oxygen combustion method to improve the concentration of carbon dioxide.

The chemical absorption method is a method of chemically absorbing carbon dioxide (CO₂) from the exhaust gas using a solvent such as amine to separate carbon dioxide as high-concentration carbon dioxide (CO₂) gas. The physical absorption method is a method of absorbing carbon dioxide (CO₂) in a physical absorption solution at a high pressure to separate carbon dioxide as high-concentration carbon dioxide (CO₂) gas. The membrane separation method is a method of separating carbon dioxide (CO₂) as high-concentration carbon dioxide (CO₂) gas using a membrane that selectively allows penetration of carbon dioxide (CO₂). The cryogenic separation method is a method of separating carbon dioxide (CO₂) using a difference in boiling point by liquefaction at a cryogenic temperature. In addition, the oxygen combustion method is a method of burning produced oxygen using an air separation plant to separate carbon dioxide (CO₂) at a high concentration.

By bringing the gas containing carbon dioxide into contact with the first solution after increasing the carbon dioxide (CO₂) concentration in the gas using the above-described method, the carbon dioxide can be caused to efficiently react with the alkali metal oxide, and thus an alkali metal carbonate can be more efficiently obtained.

### (First Solution)

The alkali metal hydroxide in the first solution is not particularly limited, and in consideration of easy progress of the reaction of Reaction Formulas (1) and (2), easy availability of the alkali metal hydroxide, and the like, as the alkali metal, lithium (Li), potassium (K), or sodium (Na) is preferable, potassium (K) or sodium (Na) is more preferable, and sodium (Na) is still more preferable. That is, sodium hydroxide (NaOH), potassium hydroxide (KOH), or lithium hydroxide (LiOH) is preferable, sodium hydroxide (NaOH) or potassium hydroxide (KOH) is more preferable, and sodium hydroxide (NaOH) is still more preferable.

In the first step, as the alkali metal hydroxide, the above-described hydroxide can be used alone or in combination of plural kinds.

The first solution is obtained by, for example, electrolysis of an alkali metal chloride aqueous solution, a metathesis reaction of calcium hydroxide and an alkali metal carbonate, or hydration of a solid alkali metal hydroxide. The first solution can also be produced by electrolysis using an ion-exchange membrane method. An alkali metal hydroxide can be obtained with low energy. Therefore, for example, a method using bipolar membrane electrodialysis can also be preferably used.

From the viewpoint of the above-described production method or the like, the first solution is preferably an aqueous solution. In addition, when the first solution is an aqueous solution, a specific care for the specification of the device or the like to be used is unnecessary, which is advantageous from the viewpoint of environmental burden. When the first solution is an aqueous solution, water as a medium is not particularly limited. For example, various kinds of water such as tap water, distilled water, ion exchange water, or industrial water can be used.

The concentration of the alkali metal hydroxide in the first solution is preferably 0.1 mol/L or more and more preferably 0.5 mol/L or more. When the concentration is in the above-described range, the amount of carbon dioxide absorbed by the first solution can be increased, and carbon dioxide can be efficiently fixed. In addition, the alkali metal concentration and the carbonate ion concentration in the second solution can be set to concentrations suitable for the second step described below.

The upper limit of the concentration of the alkali hydroxide in the first solution is not particularly limited and is preferably as high as possible from the viewpoint of, for example, efficiently fixing carbon dioxide. On the other hand, for example, when the concentration is 8 mol/L (corresponding to about 25% by mass) or more, freezing occur in a pipe during the winter months, and a facility such as insulation or a jacket heater may be required. In addition, when the concentration is 1.25 mol/L (corresponding to about 5% by mass) or more, the alkali hydroxide is legally (for example, Poisonous and Deleterious Substances Control Act) handled as a toxic substance, and a facility corresponding thereto is necessary. In consideration of easy handling of the first solution and suppression of an increase in facility cost depending on the specification or the like of the device, the concentration is preferably 1.1 mol/L or less and more preferably 1.0 mol/L or less.

The concentration of the alkali hydroxide in the first solution is measured according to JIS K0102:2019 (48.2 flame atomic absorption spectroscopy) when the alkali metal is sodium, and is measured according to JIS K0102:2019 (49.2 flame atomic absorption spectroscopy) when the alkali metal is potassium.

The produced first solution may be stored in a tank or the like before being brought into contact with the exhaust gas containing carbon dioxide. Alternatively, the produced first solution may be supplied to facility (for example, a scrubber described below) for bringing the first solution into direct contact with the exhaust gas containing carbon dioxide.

In the present invention, a facility for bringing the first solution and the gas containing carbon dioxide into contact with each other to produce the second solution is preferably provided adjacent to a facility for exhausting the exhaust gas containing carbon dioxide. By providing the facilities as described above, the distance where the pipe is laid to convey the exhaust gas can be reduced, which is industrially advantageous.

### (Contact)

In the first step, it is required to bring the first solution containing an alkali metal hydroxide and the gas containing carbon dioxide into contact with each other. Due to the contact, the reaction of the alkali metal hydroxide and the carbon dioxide, that is, Reaction Formulas (1) and (2) progress, and at least one alkali metal salt among an alkali metal carbonate and an alkali metal bicarbonate is obtained.

The contact in the first step is the contact between the first solution and the gas containing carbon dioxide, that is, gas-liquid contact. As a device used for the contact, any device used for the gas-liquid contact can be adopted without any particular limitation. For example, a device (also collectively referred to as "scrubber"), for example, a packed tower where various fillers such as a Raschig ring or a Pall ring are packed or a plate tower where various trays such as a sieve tray or a bubble cap tray are provided is preferably used. By adopting the scrubber, the reaction of Reaction Formulas (1) and (2) is likely to progress, and carbon dioxide can be more efficiently fixed.

By adopting the scrubber, basically, a flow type is adopted for the contact in the first step.

In addition, as a device other than the scrubber, for example, a container that can store liquid or a reactor including a supply port through which gas can be supplied to the container can also be used. In this case, a flow type that continuously supplies and exhausts liquid may be adopted, or a batch type that holds liquid in the container and supplies exhausts gas for a certain period of time may be adopted.

The form of the supply port through which gas is supplied to the container is not particularly limited, and a jig such as a spray nozzle or a bubble forming nozzle that can supply liquid in the form of bubbles from a bottom surface of the container may be provided. The gas-liquid contact is likely to progress. Therefore, the reaction of Reaction Formulas (1) and (2) is more likely to progress, and carbon dioxide can be efficiently fixed. In addition, due to the same reason as described above, the container may include a stirrer.

In the contact, it is preferable that the amount of the alkali metal carbonate (Ma₂CO₃) further increases, that is, the progress of the reaction of Reaction Formula (1) is facilitated. The reason for this as follows. As represented by Reaction Formulas (3) and (4) described below, when the alkali metal carbonate (Ma₂CO₃) is used, the amount of calcium carbonate used can be further reduced, and carbon dioxide can be more efficiently fixed.

As a method of facilitating the progress of the reaction of Reaction Formula (1) in preference to the reaction of Reaction Formula (2), the adjustment of pH, a reaction temperature, a reaction time, or the like can be adopted, and the adjustment of pH is the simplest and most reliable method.

The pH is preferably 8.5 or more, more preferably 10 or more, still more preferably 11 or more, and still more preferably 12 or more. By causing the reaction to occur while increasing the pH, the reaction of Reaction Formula (1) is more likely to progress in preference to the reaction of Reaction Formula (2). Therefore, a larger amount of the alkali metal carbonate (Ma₂CO₃) can be obtained.

From the viewpoint of facilitating the preferential progress of Reaction Formula (1), the upper limit is not particularly limited. In order to more efficiently facilitate the preferential progress of Reaction Formula (1), the pH is preferably 13.5 or less and more preferably 13 or less.

For the adjustment of pH, for example, an inorganic alkali agent such as sodium hydroxide or potassium hydroxide may be used. In addition, optionally, a mineral acid such as hydrochloric acid or sulfuric acid or an organic acid such as acetic acid may be used.

The reaction temperature is not particularly limited and may be, for example, 10 to 80°C. From the viewpoint of more efficiently facilitating the progress of the reaction, the reaction temperature is preferably 15 to 60°C and more preferably 20 to 45°C.

In addition, the reaction time is not particularly limited and may be, for example, 10 minutes to 1 hour. From the viewpoint of more efficiently facilitating the progress of the reaction, the reaction time is preferably 15 to 50 minutes and more preferably 20 to 45 minutes.

A molar ratio (carbon dioxide/alkali metal hydroxide) of the carbon dioxide in the exhaust gas to be brought into contact with the first solution to the alkali metal hydroxide in the first solution is preferably 0.1 to 1.0, more preferably 0.2 to 0.9, and still more preferably 0.3 to 0.8. When the molar ratio is in the above-described range, the carbon dioxide in the exhaust gas can be efficiently absorbed in the first solution. In addition, the concentration can be adjusted to be suitable for the reaction of the gypsum-containing material described below. Therefore, carbon dioxide can be more efficiently fixed.

### [Second Step]

The second step is a step of bringing a second solution containing at least one alkali metal salt among an alkali metal carbonate and an alkali metal bicarbonate and a gypsum-containing material into contact with each other to produce calcium carbonate.
In the second step,
reactions represented by the following Reaction Formulas (3) and (4) progress depending on the kind of the alkali metal salt obtained in the first step, that is, the alkali metal carbonate and the alkali metal bicarbonate.

   Ma₂CO₃ + CaSO₄ → CaCO₃ + Ma₂SO₄ ... (3)

   2MaHCO₃ + CaSO₄ → CaCO₃ + Ma₂SO₄ + CO₂ + H₂O ... (4)

   In Reaction Formulas (3) and (4), Ma represents an alkali metal, which is the same as that of Reaction Formulas (1) and (2).

### (Gypsum-Containing Material)

As the gypsum-containing material used in the method for fixing carbon dioxide according to one aspect of the present invention, any material containing gypsum that is at least one of calcium sulfate or calcium sulfate hydrate can be used without any particular limitation.

The calcium sulfate, that is, an anhydrite is called gypsum anhydrite. Examples of the calcium sulfate hydrate include a dihydrate called gypsum dihydrate and a 1/2 hydrate called gypsum hemihydrate. In the fixing method according to one aspect of the present invention, any of the anhydrite or the hydrate can also be used.

In addition, regarding the anhydrite, for example, when the hydrate is calcined, a soluble gypsum anhydrite (also called "gypsum anhydrite II"), an insoluble gypsum anhydrite (also called "gypsum anhydrite II"), or calcined gypsum such as α type or β type depending on the specification of calcination or the like is also present. In the fixing method according to one aspect of the present invention, any of the anhydrites can also be used.

Examples of the gypsum-containing material containing the above-described gypsum include not only gypsum itself but also a product formed of gypsum a waste thereof such as a gypsum board or a waste gypsum board; and a by-product that is produced in the process of producing chemical products, for example, a recovery of a flue gas desulfurization process (also called "flue-gas gypsum", for example, a recovery during a flue gas desulfurization process in copper refining or the like), fluorogypsum (that is produced as a by-product in a step of producing hydrogen fluoride), phosphogypsum (that is produced as a by-product in a step of producing wet phosphoric acid), titanogypsum (that is produced as a by-product in a step of producing titanium oxide), or active silica gypsum (that is produced as a by-product in a step of producing active silica)

In addition, incinerated ash that is produced in the process of incinerating a municipal waste or the like contains gypsum anhydrite. Therefore, a waste such as incinerated ash can be used as the gypsum-containing material. As the other wastes, a gypsum-containing sludge obtained in various waste water treatment processes can also be used as the gypsum-containing material.

This way, in the method for fixing carbon dioxide according to one aspect of the present invention, the gypsum-containing material can be widely adopted from not only gypsum itself but also various wastes and various by-products.

The content of gypsum in the gypsum-containing material cannot be uniquely determined because it can change depending on whether the gypsum is present as a gypsum anhydrite or a hydrate (gypsum dihydrate or gypsum hemihydrate) and varies depending on which one of the gypsum, the by-product, or the waste is adopted as the gypsum-containing material.

In the method for fixing carbon dioxide according to one aspect of the present invention, as long as the gypsum-containing material contains even a small amount of gypsum, carbon dioxide can be fixed. From the viewpoint of suppressing the amount of the gypsum-containing material used and efficiently fixing carbon dioxide, the content of calcium sulfate (anhydrite) is preferably 1% by mass or more, more preferably 3% by mass or more, and still more preferably 5% by mass or more. In addition, from the viewpoint of efficiently fixing carbon dioxide, the upper limit is not particularly limited. From the viewpoint of easy availability, the content of calcium sulfate is 97% by mass or less.

The gypsum-containing material used in the method for fixing carbon dioxide according to one aspect of the present invention may be appropriately selected from the gypsum-containing materials and used. In consideration of industrial advantage of recycling gypsum, various wastes such as a waste gypsum board or incinerated ash and various by-products such as flue-gas gypsum, fluorogypsum, phosphogypsum, titanogypsum, or active silica gypsum are preferably used. From the viewpoint of more efficiently fixing carbon dioxide, a waste gypsum board or the various by-products are preferable. From the viewpoint of effectively utilizing a waste, a waste gypsum board is more preferable.

As a solid or a mixed liquid (slurry), the gypsum-containing material may be brought into contact with the second solution containing at least one alkali metal salt among an alkali metal carbonate and an alkali metal bicarbonate.

When the gypsum-containing material is brought into contact with the second solution as a solid, in consideration of easy handling, the average particle size of the gypsum-containing material may be 10 mm or less, 1.0 mm or less, or 0.5 mm or less. In addition, when the gypsum-containing material is brought into contact with the second solution as the mixed liquid (slurry), from the viewpoint of obtaining the stable mixed liquid (slurry), the particle size of the gypsum-containing material may be about 500 um or less.

The average particle size of the gypsum-containing material is measured using a sieving method, a Ro-tap automatic siever including reference sieves according to JIS Z 8801:2019 is used, the sieves are disposed to overlap each other in order from the sieve having the smallest pore size, samples remaining in the respective sieves are weighed, and a particle size corresponding to a cumulative value of 50% is obtained as the average particle size.

In order to obtain the particle size, the gypsum-containing material may be crushed using a crusher such as a roll mill in advance.

In addition, when a waste gypsum board is used, it is preferable to crush the waste gypsum board in advance after removing wall paper or the like on the surface.

When a mixed liquid of the gypsum-containing material is used, it is preferable that the medium is water. Since calcium sulfate has low solubility in water, the mixed liquid is a slurry of the gypsum-containing material. A mixing ratio (gypsum-containing material/medium) between the gypsum-containing material and the medium (water) is preferably in a range of 1:3 to 1:50 and more preferably in a range of 1:5 to 1:20. By adopting the mixing ratio, the gypsum-containing material and the second solution are likely to be brought into contact with each other, and the progress of the reactions of Reaction Formulas (3) and (4) can be more efficiently facilitated.

### (Second Solution)

The second solution used in the reaction of the second step is a solution that is obtained in the first step and contains at least one alkali metal salt among an alkali metal carbonate and an alkali metal bicarbonate.

In consideration of the fact that the first solution is preferably an aqueous solution and the fact that the second solution is obtained by bringing the first solution and the gas containing carbon dioxide into contact with each other, the second solution is preferably an aqueous solution as in the first solution. When the second solution is an aqueous solution, a specific care for the specification of the device or the like to be used is unnecessary, which is advantageous from the viewpoint of environmental burden.

The second solution may be any of a solution containing at least one alkali metal salt among an alkali metal carbonate and an alkali metal bicarbonate, that is, a solution containing only an alkali metal carbonate, a solution containing only an alkali metal bicarbonate, or a solution containing an alkali metal carbonate and an alkali metal bicarbonate. As described above, from the viewpoint of more efficiently fixing carbon dioxide, it is preferable that the second solution is a solution that facilitates the progress of the reaction of Reaction Formula (1) in preference to the reaction of Reaction Formula (2), that is, that contains a large amount of an alkali metal carbonate.

As described above, when a solution containing an alkali metal carbonate is obtained as the second solution, the preferential progress of the reaction of Reaction Formula (1) can be facilitated by adjusting the pH or the like. Reaction Formula (2) may also progress such that the second solution contains an alkali metal bicarbonate. That is, even when the preferential progress of the reaction of Reaction Formula (1) is attempted, it is substantially impossible to inhibit the progress of Reaction Formula (2). Therefore, it can be said that the second solution obtained in the first step is substantially a solution containing an alkali metal carbonate and an alkali metal bicarbonate.

In the method for fixing carbon dioxide according to one aspect of the present invention, the content of the alkali metal carbonate in the second solution is not particularly limited because carbon dioxide can be fixed at any content. From the viewpoint of more efficiently fixing carbon dioxide, a ratio of the alkali metal forming the alkali metal carbonate to the total content of the alkali metal in the second solution is preferably 90 mol% or more, more preferably 95 mol% or more, and still more preferably 99 mol% or more.

In addition, from the viewpoint of more efficiently fixing carbon dioxide, the upper limit is preferably as high as possible and may be 100 mol% because it can be relatively easily adjusted by means of the above-described adjustment of pH.

The concentration of the alkali metal in the second solution is preferably 0.1 mol/L or more, more preferably 0.25 mol/L or more, and still more preferably 0.4 mol/L or more. By adjusting the alkali metal concentration and the carbonate ion concentration to be in the above-described range, the reaction efficiency of Formula (3) and (4) can be improved, and the amount of calcium carbonate produced can be increased. In addition, when a waste gypsum board is used as the gypsum-containing material, the process efficiency of the waste gypsum board can be improved.

Due to the same reason as described above, the carbonate ion concentration in the second solution is preferably 0.05 mol/L or more, more preferably 0.10 mol/L or more, and still more preferably 0.25 mol/L or more.

The upper limit of the concentration of the alkali metal in the second solution is not particularly limited and is preferably as high as possible from the viewpoint of efficiently fixing carbon dioxide. On the other hand, in consideration of suppressing an increase in facility cost depending on the specification or the like of the device, the upper limit is preferably 2.0 mol/L or less, more preferably 1.5 mol/L or less, and still more preferably 1.0 mol/L or less.

In addition, due to the same reason as described above, the upper limit of the carbonate ion concentration in the second solution is preferably 1.5 mol/L or less, more preferably 1.0 mol/L or less, and still more preferably 0.5 mol/L or more.

The concentration of the alkali metal in the second solution can be measured using the same method as the method of measuring the concentration of the alkali metal in the first solution. In addition, the carbonate ion concentration in the second solution is a value calculated from the concentration of carbon measured using a total organic carbon (TOC) measuring device.

### (Contact)

In the second step, the second solution and the gypsum-containing material are brought into contact with each other to obtain calcium carbonate.

As described above, the gypsum-containing material is a solid or a mixed liquid (slurry), and the second solution is a liquid. Accordingly, the contact between the second solution and the gypsum-containing material is solid-liquid contact or liquid-liquid contact. When the gypsum-containing material is a solid, the solid gypsum-containing material is added to the second solution or the second solution is added to the solid gypsum-containing material for mixing. In addition, when the gypsum-containing material is a mixed liquid (slurry), the second solution and the gypsum-containing material are mixed.

Specific preferable examples of a method of the contact of the second solution and the gypsum-containing material include a method of supplying the second solution to a container that stores the gypsum-containing material. In this case, for example, there are: (ia) a method of storing the gypsum-containing material containing a predetermined concentration of calcium sulfate in a container and supplying a predetermined amount of the second solution depending on the concentration of calcium sulfate; (ib) a method of storing a predetermined amount of the second solution in a container and supplying the gypsum-containing material containing calcium sulfate in the opposite order to (ia); and (ii) a method of continuously or intermittently supplying the gypsum-containing material and the second solution to a container such that the gypsum-containing material and the second solution satisfy a predetermined ratio. The methods (ia), (ib), and (ii) are applicable irrespective of whether the gypsum-containing material is a solid or a mixed liquid (slurry).

For the contact between the second solution and the gypsum-containing material, for example, a container that can store the gypsum-containing material and a reactor including a supply port through which the second solution can be supplied, or a container that can store the second solution and a reactor including a supply port through which the gypsum-containing material can be supplied can be used.

It is preferable that the supply port through which the second solution can be supplied include supply means corresponding to the method of supplying the second solution. For example, when the second solution is supplied by dropping, the supply port may include a dropping nozzle. In addition, the supply port may include flow rate adjustment means. The same configuration as that of the second liquid can be applied to a case where the gypsum-containing material is supplied as a mixed liquid (slurry).

It is preferable that the reactor used for the contact between the second solution and the gypsum-containing material includes a stirrer in order to facilitate the progress of the contact between the second solution and the gypsum-containing material and to more efficiently facilitate the progress of Reaction Formulas (3) and (4).

For the contact between the second solution and the gypsum-containing material, a flow type may be adopted or a batch type may be adopted. In (ia) and (ib) described above, a batch type is basically adopted. For example, by supplying the gypsum-containing material whenever the gypsum-containing material in the container is removed by the contact with the second solution, a flow type can also be adopted.

The form of the contact in the second step may be determined comprehensively in consideration of not only the form of the contact in the first step but also, for example, the site area where the method for fixing carbon dioxide according to one aspect of the present invention can be performed, a request for production efficiency, and other various circumstances.

A molar ratio (carbonate ion/calcium sulfate) of carbonate ions in the second solution to calcium sulfate (CaSO₄) in the gypsum-containing material is preferably at least 1.0 based on Reaction Formula (3). In addition, from the viewpoint of excessively supplying carbonate ions to calcium sulfate to efficiently facilitate the progress of Reaction Formula (3), the upper limit is preferably 1.2 or less and more preferably 1.1 or less.

A molar ratio (hydrogen carbonate ion/calcium sulfate) of hydrogen carbonate ions in the second solution to calcium sulfate (CaSO₄) in the gypsum-containing material is preferably at least 2.0, more preferably 2.3 or more, and still more preferably 2.5 or more based on Reaction Formula (4). In addition, from the viewpoint of excessively supplying carbonate ions to calcium sulfate to efficiently facilitate the progress of the reaction of Reaction Formula (4), the upper limit is preferably 3.5 or less, more preferably 3.2 or less, and still more preferably 3.0 or less.

In the reaction caused by the contact in the second step, the reaction temperature is not particularly limited and may be, for example, 10 to 80°C. From the viewpoint of more efficiently facilitating the progress of the reaction, the reaction temperature is preferably 15 to 60°C and more preferably 20 to 45°C.

In addition, the reaction time is not particularly limited and may be, for example, 10 minutes to 1 hour. From the viewpoint of more efficiently facilitating the progress of the reaction, the reaction time is preferably 15 to 50 minutes and more preferably 20 to 45 minutes.

### (Calcium Carbonate)

Calcium carbonate is produced in the second step. Calcium carbonate produced in the second step is insoluble in water, and thus calcium carbonate is a precipitate. In the method for fixing carbon dioxide according to one aspect of the present invention, the precipitated calcium carbonate may be collected. The collection of calcium carbonate can be performed, for example, by decantation, filtration, or the like, and drying by heating may be further performed.

The collected calcium carbonate can be used as a composition for cement, a material for mortar and concrete, a filler, or a building material.

In the method for fixing carbon dioxide according to one aspect of the present invention, carbon dioxide in the gas, more specifically, carbon dioxide in exhaust gas produced from various facilities such as a power plant, an incinerator, or a plant facility is fixed as calcium carbonate. As described above, calcium carbonate is a valuable. Therefore, it can be said that the method for fixing carbon dioxide according to one aspect of the present invention is a method capable of not only simply fixing carbon dioxide but also providing an added value. In addition, by using a waste such as a waste gypsum board or a by-product such as fluorogypsum as the gypsum-containing material, there is also an advantageous effect in that the waste and the by-product can be effectively recycled without being wasted.

The method for fixing carbon dioxide according to one aspect of the present invention is a method capable of efficiently fixing carbon dioxide. Further, from the viewpoint that an economic added value can be provided and the amount of the waste and the by-product can be reduced, an additional effect of reducing the environmental burden can be obtained.

### [Method for Producing Calcium Carbonate]

One aspect of the present invention relates to a method for producing calcium carbonate, the method including:
a first step of bringing a first solution containing an alkali metal hydroxide and gas containing carbon dioxide into contact with each other to produce a second solution containing at least one alkali metal salt among an alkali metal carbonate and an alkali metal bicarbonate; and
a second step of bringing the second solution and a gypsum-containing material into contact with each other to produce calcium carbonate.

In the method for producing calcium carbonate according to one aspect of the present invention, the first step and the second step are the same as the content described above in the method for fixing carbon dioxide.

As described above in the method for fixing carbon dioxide, carbon dioxide can be efficiently fixed by the first step and the second step. Since calcium carbonate is obtained by fixing carbon dioxide, the efficient fixing of carbon dioxide refers to the efficient production of calcium carbonate. Accordingly, with the method for producing calcium carbonate according to one aspect of the present invention, calcium carbonate can be efficiently produced.

In the method for producing calcium carbonate according to one aspect of the present invention, a yield of calcium carbonate may be 90% by mass or more, 95% by mass or more, 98% by mass or more, 99% by mass or more, 99.5% by mass or more, or 100% by mass. At a temperature during the contact in the second step, that is, at a temperature of the second solution, a soluble component in the calcium carbonate may remain in the second solution, but the other components precipitate as calcium carbonate and can be collected. Here, the yield of calcium carbonate is a mass ratio of the amount of calcium (Ca) in the calcium carbonate to the amount of calcium (Ca) supplied from the gypsum-containing material.

Accordingly, with the method for producing calcium carbonate according to one aspect of the present invention, it can be said that calcium carbonate can be efficiently produced.

In the method for producing calcium carbonate according to one aspect of the present invention, calcium carbonate can be efficiently produced, and carbon dioxide in exhaust gas or the like can be fixed, which contributes the environmental improvement. In addition, by using a waste such as a waste gypsum board or a by-product such as fluorogypsum as the gypsum-containing material, there is also an advantageous effect in that the waste and the by-product can be effectively recycled without being wasted and the environmental improvement can be achieved.

### [Method for Utilizing Waste Gypsum Board]

One aspect of the present invention relates to a method for utilizing a waste gypsum board, the method including:
a step of bringing a first solution containing an alkali metal hydroxide and gas containing carbon dioxide into contact with each other to produce a second solution containing at least one alkali metal salt among an alkali metal carbonate and an alkali metal bicarbonate; and
a step of bringing the second solution and a waste gypsum board into contact with each other to produce calcium carbonate.

In the method for utilizing a waste gypsum board according to one aspect of the present invention, the first step and the second step are the same as the content described above in the method for fixing carbon dioxide, and a waste gypsum board is adopted as the gypsum-containing material in the second step.

As described above in the method for fixing carbon dioxide, carbon dioxide can be more efficiently fixed by the first step and the second step, and even when a waste gypsum board as a waste is used as the gypsum-containing material, carbon dioxide can be fixed to obtain calcium carbonate.

When a waste gypsum board is wasted, it is necessary to waste the waste gypsum board as an industrial waste, and thus a cost is required simply for the waste. With the method for utilizing a waste gypsum board according to one aspect of the present invention, the amount of the waste gypsum board wasted can be reduced, and calcium carbonate as a valuable can be produced. The method for utilizing a waste gypsum board is a new utilization method, not a known method in the related art. The method for utilizing a waste gypsum board is a new utilization method, can provide an economic added value, can fix carbon dioxide, and can reduce a waste, which significantly contributes to the environmental improvement.

### Examples

### [Example 1]

By simulating exhaust gas exhausted from a cement factory, simulated exhaust gas where 80% by volume of N₂ gas and 20% by volume of CO₂ gas were mixed was produced.

As the first solution, a sodium hydroxide solution (0.5 N) was prepared by using tap water as a solvent and using sodium hydroxide (NaOH, 20% by mass, guaranteed reagent, manufactured by Kanto Chemical Co., Inc.). 1 L of the sodium hydroxide solution was stored in a container including a supply port through which the gas containing carbon dioxide can be supplied, and was aerated with the simulated exhaust gas (N₂: 80% by volume, CO₂: 20% by volume) from the supply port for 30 minutes at a circulation rate of 2 L/min. In the process of the aeration, the pH of the solution in the container was 11, and the second solution containing sodium carbonate (Na₂CO₃) was obtained. In the obtained second solution, the sodium concentration was 0.5 mol/L, and the carbonate ion concentration was 0.25 mol/L.

An amount of the second solution (4 L) corresponding to the carbonate ion content of 1 mol was added at once into a container storing 1 mol of gypsum dihydrate powder (average particle size: 0.5 mm), and the components were stirred at 20°C for 30 minutes. After the stirring, the reaction solution was filtered, and the recovery was dried.

In order to check whether the alkali metal salt in the second solution is sodium carbonate or sodium hydrogen carbonate, powder obtained by heating a part of the second solution is measured by X-ray diffraction using the following method. In addition, the recovery obtained by the drying was also measured by X-ray diffraction.

### (X-ray Diffraction Measurement)

Using a powder X-ray diffractometer ("X'pert Pro" (trade name), manufactured by Malvern Panalytical Ltd.), the measurement was performed under the following measurement conditions.
Measurement range: 2θ = 10 to 70°
Step size: 0.01°
Scan speed: 0.05°/s
Voltage: 45 kV
Current: 40 mA

As a result of substance identification from the X-ray diffraction profile obtained by the X-ray diffraction measurement, it was verified that most of the alkali metal salt in the second solution was sodium carbonate (about 99.5 mol%). As a result of performing the substance identification on the recovery obtained by the drying, it was verified that the total amount was calcium carbonate. In addition, the yield of calcium carbonate was 100%.

### [Example 2]

A second solution was obtained using the same method as that of Example 1, except that 1 L of the sodium hydroxide solution (0.5 N) was aerated with the simulated exhaust gas (N₂: 80% by volume, CO₂: 20% by volume) for 45 minutes at a circulation rate of 2 L/min and the pH was adjusted to 10. In the obtained second solution, the sodium concentration was 0.5 mol/L, and the carbonate ion concentration was 0.34 mol/L. A part of the obtained second solution was collected, and the matter dissolved in the second solution was identified using the above-described method. As a result, it was found that the ratio of each of sodium carbonate and sodium hydrogen carbonate was 50 mol%.

An amount of the second solution (2.94 L) corresponding to the carbonate ion content of 1 mol was added at once into a container storing 1 mol of gypsum dihydrate powder (particle size: 0.5 mm or less), and the components were stirred at 20°C for 30 minutes. After the stirring, the reaction solution was filtered, and the recovery was dried.

The recovery of Example 2 was measured by X-ray diffraction under the same conditions as those of Example 1 to obtain an X-ray diffraction profile. As a result of the substance identification from the X-ray diffraction profile, it was verified that the total amount of the obtained recovery was calcium carbonate. In addition, the yield of calcium carbonate was 100%.

### [Example 3]

As the gypsum-containing material, a waste gypsum board was prepared. After peeling off wall paper from the waste gypsum board surface, and the waste gypsum board was crushed. The crushed waste gypsum board was classified using a sieve to collect powder having a particle size of 5 mm or less.

In the obtained waste gypsum board powder, the content of calcium sulfate was 93% by mass. The content of calcium sulfate in the waste gypsum board was measured according to JIS R 9101:2018 "Methods for Chemical Analysis of Gypsum"

The waste gypsum board powder (corresponding to 1 mol of calcium sulfate) was stored in a container. As in Example 1, an amount of the second solution corresponding to the carbonate ion content of 1 mol was added at once to the container, and the components were stirred for 30 minutes at 20°C. After the stirring, the reaction solution was filtered, and the recovery was dried.

The recovery of Example 3 was measured by X-ray diffraction under the same conditions as those of Example 1 to obtain an X-ray diffraction profile. As a result of the substance identification from the X-ray diffraction profile, it was verified that the total amount of the obtained recovery was calcium carbonate. In addition, the yield of calcium carbonate was 100%.

## Claims

1. A method for fixing carbon dioxide, the method comprising:
a first step of bringing a first solution containing an alkali metal hydroxide and gas containing carbon dioxide into contact with each other to produce a second solution containing at least one alkali metal salt among an alkali metal carbonate and an alkali metal bicarbonate; and
a second step of bringing the second solution and a gypsum-containing material into contact with each other to produce calcium carbonate.

2. The method for fixing carbon dioxide according to claim 1,
wherein the contact between the first solution and the gas containing carbon dioxide is performed at a pH of 8.5 or more and 13.5 or less.

3. The method for fixing carbon dioxide according to claim 1 or 2,
wherein a content of gypsum in the gypsum-containing material is 1% by mass or more in terms of calcium sulfate.

4. The method for fixing carbon dioxide according to any one of claims 1 to 3,
wherein the gypsum-containing material is a waste gypsum board.

5. A method for producing calcium carbonate, the method comprising:
a first step of bringing a first solution containing an alkali metal hydroxide and gas containing carbon dioxide into contact with each other to produce a second solution containing at least one alkali metal salt among an alkali metal carbonate and an alkali metal bicarbonate; and
a second step of bringing the second solution and a gypsum-containing material into contact with each other to produce calcium carbonate.

6. The method for producing calcium carbonate according to claim 5,
wherein the contact between the first solution and the gas containing carbon dioxide is performed at a pH of 8.5 or more and 13.5 or less.

7. The method for producing calcium carbonate according to claim 1 or 2,
wherein a content of gypsum in the gypsum-containing material is 1% by mass or more in terms of calcium sulfate.

8. The method for producing calcium carbonate according to any one of claims 5 to 7,
wherein the gypsum-containing material is a waste gypsum board.

9. A method for utilizing a waste gypsum board, the method comprising:
a first step of bringing a first solution containing an alkali metal hydroxide and gas containing carbon dioxide into contact with each other to produce a second solution containing at least one alkali metal salt among an alkali metal carbonate and an alkali metal bicarbonate; and
a second step of bringing the second solution and a waste gypsum board into contact with each other to produce calcium carbonate.

10. The method for utilizing a waste gypsum board according to claim 9,
wherein the contact between the first solution and the gas containing carbon dioxide is performed at a pH of 8.5 or more and 13.5 or less.

11. The method for utilizing a waste gypsum board according to claim 10 or 11,
wherein a content of gypsum in the waste gypsum board is 1% by mass or more in terms of calcium sulfate.
